# DEMANDE DE BREVET EUROPEEN

(11) **EP 0 682 965 A1**
(43) Date de publication de la demande: **22.11.1995**
(21) Numéro de dépôt: 95460024.3
(22) Date de dépôt: 17.05.1995
(51) Int. Cl.: B01D 17/00, B01D 17/02, C11B 13/00, B01D 17/038, F23G 7/05

(54) **Procédé et installation de traitement et de valorisation de déchets graisseux**

(30) Priorité: 18.05.1994 FR 9406353
(71) Demandeur: Centre de Prétraitement Régional (CPR) S.N.C., F-95500 Gonesse (FR)
(72) Inventeur: Helaine, Dominique, F-95380 Louvres (FR); Moreau, Bernard, F-92400 Courbevoie (FR); Vernhes, Frédéric, F-95270 Luzarches (FR)
(74) Mandataire: Vidon, Patrice

(57) **Abrégé**

L'invention concerne un procédé et une installation de traitement de déchets graisseux essentiellement constitués par l'émulsion d'une phase aqueuse et d'une phase grasse et de particules solides. Selon l'invention, les déchets graisseux sont homogénéisés (1) et chauffés (2) à une température supérieure à la température de fusion maximale des corps gras qu'il contiennent. Ils subissent ensuite une étape de séparation dynamique (4) permettant l'obtention d'une phase organique grasse, d'une phase aqueuse et d'une phase solide au moins partiellement déshydratée. La phase grasse récupérée subit ensuite une dégradation thermique (5) de façon à autoriser une combustion complète des corps gras contenus dans ladite phase grasse,au moins une partie de la chaleur produite au cours de l'étape de dégradation thermique étant utilisée pour chauffer lesdits déchets graisseux au cours de ladite première étape.

## Description

L'invention concerne le domaine du traitement des déchets et plus particulièrement celui des déchets graisseux, notamment d'origine alimentaire humaine ou animale. L'invention s'applique donc, entre autres, aux déchets graisseux provenant des industries agro-alimentaires et notamment aux déchets provenant des ouvrages de décantation, aux refus de fabrication et aux effluents de nettoyage de ces industries. L'invention s'applique aussi aux déchets provenant des établissements de restauration et de préparation d'aliments ainsi qu'aux déchets provenant des ouvrages de prétraitement des eaux usées urbaines ou industrielles tels que les dégraisseurs et les déshuileurs. De tels déchets sont généralement collectés à l'occasion de l'entretien des ouvrages de séparation, de rétention ou de stockage.

Ces déchets graisseux contiennent des corps gras d'origine animale et/ou végétale, purs ou en mélange, intacts ou hydrolysés partiellement ou en totalité, et présentent essentiellement trois fractions :
- une première fraction aqueuse contenant des substances dissoutes,
- une seconde fraction organique particulaire, émulsifiée, diffuse ou surnageante, constituée de matières grasses, et
- une troisième fraction renfermant des particules organiques ou minérales, en suspension, surnageantes ou sédimentées (tissus, reliefs de repas, débris végétaux, papiers, plastiques, verre, objets métalliques et notamment couverts, graviers, ...).

Le pourcentage respectif, en poids ou en volume, de ces diverses fractions dépend du type d'ouvrages entretenus et, notamment de leur dimensionnement, de leurs spécificités et de la nature de l'activité des établissements les alimentant. Ce pourcentage peut aussi dépendre de la période de l'année dans le cadre d'établissements présentant une activité à caractère saisonnier.

Les déchets graisseux sont, d'une manière courante, dirigés vers des décharges en vue de leur stockage en l'état ou, pour répondre aux contraintes réglementaires, après avoir subi préalablement un prétraitement visant à réduire leur teneur en eau.

Toutefois, dans de nombreux pays industrialisés, des textes réglementaires apportent des restrictions croissantes au stockage des déchets graisseux en décharge. Ainsi la loi française du 13 juillet 1992 transposant les priorités européennes en matière de protection de l'environnement et d'utilisation des centres de stockage de déchets ménagers réglemente et restreint l'utilisation des filières de stockage et précise notamment que seuls les déchets ultimes résultant d'un traitement optimal dans les conditions techniques et économiques du moment pourront être stockés dans les centres d'enfouissement.

De plus, il convient de noter que le caractère particulier des déchets graisseux conduit d'ores et déjà les exploitants de tels centres de stockage et d'enfouissement à refuser l'accès de ces centres à ce type de déchets.

Il existe dans l'état de la technique essentiellement deux types de traitement des déchets graisseux: le premier type consistant à effectuer un prétraitement visant à séparer les matières grasses du déchet brut afin d'obtenir un effluent aqueux pouvant être facilement épuré, le second type permettant de transformer les matières grasses en biomasse ou en substances minérales.

Ainsi, une technique connue de prétraitement consiste à coaguler les déchets graisseux au moyen d'un sel métallique (tels que du chlorure ferrique ou du chlorure d'aluminium), à les neutraliser puis à faire floculer la matière organique qu'ils contiennent au moyen d'un polymère. Le floc formé est décanté ou aéro-flotté puis déshydraté sur un filtre à bandes ou un filtre-presse. Un tel procédé conduit à l'obtention d'un effluent aqueux pouvant être rejeté en réseau d'assainissement et à une boue qui présente l'inconvénient de contenir plus de 60 % de matières grasses et des quantités significatives de fer et de chlorures.

Un autre procédé de prétraitement connu consiste à utiliser les propriétés adsorbantes de la sciure de bois, afin de produire un amalgame dense entre les matières grasses et la sciure compactée au moyen d'un filtre-presse, et une phase aqueuse appauvrie en matières grasses et en DCO.

Toutefois, de tels procédés aboutissent à un déplacement de la pollution constituée par les matières grasses et non à son élimination puisqu'ils conduisent à une concentration de ces composés dans la phase solide (sous-déchet).

En ce qui concerne le traitement par voie biologique des déchets graisseux, il est connu dans l'état de la technique de dégrader les déchets gras en milieu liquide, en anaérobiose ou, de préférence en aérobiose, avec ou sans prétraitement des matières grasses.

On connaît également des procédés de dégradation biologique aérobie en milieu solide (compostage) en association avec des agents structurants (sciure de bois, déchets verts broyés ou non) et des fractions organiques de composition en azote et en phosphore complémentaire à celle des déchets gras.

Toutefois, de tels procédés biologiques présentent l'inconvénient de nécessiter des ouvrages de tailles importantes pour traiter les déchets présentant une charge élevée en matières grasses.

Enfin, on connaît également dans l'état de la technique différents procédés visant à transformer les déchets graisseux en composés minéraux.

Ainsi, il existe des procédés mettant en oeuvre une oxydation au moyen d'agents fortement oxydants (ozone, peroxyde d'hydrogène), au moyen de catalyseurs (réactif de Fenton), en milieu acide sous-pression et à hautes températures. La charge organique des déchets graisseux étant souvent importante, de telles techniques présentent l'inconvénient pour ce type de déchets, d'être consommatrices de quantités importantes de réactifs et donc d'être coûteuses à mettre en oeuvre. De plus elles présentent également les inconvénients liés à leurs paramètres de mise en oeuvre (hautes pressions, hautes températures, réactifs très oxydants...).

Il est également connu d'incinérer les déchets graisseux après une étape de prétraitement par décantation statique dans un four à lit fluidisé. Toutefois, une telle méthode nécessite un four de grande dimension et un équipement de traitement des effluents gazeux compte-tenu du caractère partiellement minéral du déchet.

L'objectif de la présente invention est de présenter un procédé de traitement des déchets graisseux ne présentant pas les inconvénients ci-dessus mentionnés des procédés connus de l'état de la technique.

Un autre objectif de l'invention est de décrire un tel procédé ne consommant pas d'énergie à l'état stationnaire mais permettant au contraire une production d'énergie pouvant être avantageusement valorisée.

Encore un autre objectif de l'invention est de proposer un tel procédé permettant de traiter les déchets graisseux d'origine alimentaire quelle que soit leur provenance, d'éliminer totalement les matières grasses qu'ils renferment et de valoriser de façon optimale le contenu énergétique des corps gras.

Un objectif de la présente invention est également de fournir un tel procédé qui se révèle d'autant plus avantageux à mettre en oeuvre que la teneur en matières grasses des déchets graisseux à traiter est importante.

Encore un autre objectif de l'invention est de proposer une installation pour la mise en oeuvre d'un tel procédé.

Ces différents objectifs, ainsi que d'autres qui apparaîtront par la suite, sont atteints grâce à l'invention qui concerne un procédé de traitement de déchets graisseux essentiellement constitués par l'émulsion d'une phase aqueuse et d'une phase grasse et de particules solides, caractérisé en ce qu'il comprend une première étape consistant à homogénéiser et à chauffer lesdits déchets graisseux à une température supérieure à la température de fusion maximale des corps gras contenus dans lesdits déchets, une deuxième étape de séparation dynamique desdits déchets permettant l'obtention d'une phase organique grasse, d'une phase aqueuse et d'une phase solide au moins partiellement déshydratée, et une troisième étape consistant à faire subir à ladite phase grasse une dégradation thermique de façon à autoriser une combustion complète des corps gras contenus dans ladite phase grasse, et en ce qu'il consiste à utiliser au moins une partie de la chaleur produite au cours de l'étape de dégradation thermique pour chauffer lesdits déchets graisseux au cours de ladite première étape.

Ainsi, l'invention propose un procédé de traitement pouvant être efficacement mis en oeuvre sur des déchets graisseux se présentant sous la forme d'un mélange hétérogène. Le procédé selon l'invention présente l'avantage de pouvoir être mis en oeuvre sur des déchets dont la teneur, l'origine et la nature des matières grasses, la nature des sédiments peuvent varier considérablement.

L'invention présente surtout l'avantage de proposer un procédé dont la consommation en énergie est totalement couverte par la production d'énergie au cours de la phase d'incinération et qui fournit même un excédent d'énergie pouvant être avantageusement valorisé par exemple pour la production d'eau chaude ou encore par le biais d'un procédé de séchage. Le procédé selon l'invention constitue donc un procédé de valorisation des déchets graisseux.

L'invention présente aussi l'avantage de fournir un procédé dont les performances sont, d'une manière générale, peu dépendantes de la nature des produits traités.

Le procédé décrit présente par ailleurs également l'avantage d'avoir des performances qui augmentent lorsque la teneur en matières grasses des déchets à traiter croît.

Enfin, il convient de noter que le procédé selon l'invention met en oeuvre une incinération n'incluant aucun polluant minéral en quantité significative et générant des gaz de combustion composés essentiellement de vapeur d'eau et de dioxyde de carbone.

Avantageusement, ledit procédé comprend une étape préliminaire de filtration desdits déchets visant à séparer lesdites particules présentant une granulométrie supérieure à la classe 2 - 10 mm, préférentiellement à la classe 3-5 mm. Une telle étape permet de séparer les éléments et particules de la phase solide présentant une taille importante.

Egalement avantageusement, la température à l'issue de ladite première étape est comprise entre 60° C et 100°C, préférentiellement entre 65 et 85°C. Bien sûr, la température choisie dépendra de la nature des matières grasses contenues dans les déchets graisseux à traiter.

Selon une variante préférée de l'invention, lesdits déchets graisseux renferment au moins 1% en poids de matières grasses. Une telle teneur en matières grasses permet de garantir un bilan énergétique excédentaire du procédé. On notera toutefois que, dans certains modes de réalisation du procédé, dans le cadre du traitement de déchets graisseux contenant des matières grasses dont la combustion libère beaucoup d'énergie, le taux de matières grasses contenus dans les déchets pourra être inférieur à 1%, tout en assurant une production d'énergie équilibrée.

Préférentiellement, ladite deuxième étape de séparation dynamique est effectuée par centrifugation.

Egalement préférentiellement, ladite première étape est effectuée sous agitation. Une telle agitation permet d'obtenir une bonne homogénéisation des déchets graisseux.

Selon une variante intéressante de l'invention, le procédé comprend une étape consistant à récupérer au moins une partie de la chaleur de la phase aqueuse résultant de ladite deuxième étape pour chauffer lesdits déchets graisseux au cours de ladite première étape. Ainsi, l'énergie produite par l'incinération de la phase organique grasse et la phase aqueuse encore chaude provenant des moyens de séparation dynamique sont avantageusement utilisées pour chauffer les déchets graisseux lors de ladite deuxième étape. Ceci permet d'accroître la quantité d'énergie pouvant être valorisée lors de la mise en oeuvre du procédé.

Egalement selon une variante de l'invention, le procédé comprend une étape consistant à ajouter au moins un produit chimique auxdits déchets graisseux au cours de ladite première étape. De tels produits chimiques peuvent notamment être constitués de chaux (vive ou éteinte), de coagulants chimiques (perchlorure de fer, sulfate d'alumine,...) ou de substances tensio-actives, et ajoutées dans l'objectif d'optimiser l'étape de séparation des trois phases générées ou de certaines d'entre elles.

L'invention concerne également une installation pour la mise en oeuvre d'un tel procédé de traitement de déchets graisseux caractérisée en ce qu'elle comprend au moins une cuve destinée à recevoir lesdits déchets graisseux, des moyens de chauffage desdits déchets graisseux, des moyens de séparation dynamique permettant d'obtenir une phase solide, une phase grasse et une phase aqueuse à partir desdits déchets graisseux chauffés, des moyens d'incinération couplés à des moyens de récupération de la chaleur produite lors de cette incinération, lesdits moyens de chauffage incluant un échangeur de la chaleur produite par lesdits moyens d'incinération et récupérée par lesdits moyens de récupération pour chauffer lesdits déchets graisseux présents dans ladite cuve ou à leur sortie de ladite cuve.

Avantageusement, ladite cuve destinée à recevoir lesdits déchets graisseux est pourvue d'au moins un dispositif d'agitation.

Préférentiellement, lesdits moyens de séparation dynamique incluent un dispositif de centrifugation.

Egalement préférentiellement, ledit dispositif de centrifugation est une décanteuse centrifuge triphasique.

Selon une variante de réalisation de l'installation selon l'invention, ladite installation comprend de plus des moyens de filtration prévus en amont de ladite cuve.

Préférentiellement, l'installation comprend un dispositif échangeur de la chaleur de la phase aqueuse provenant desdits moyens de séparation dynamique, ledit dispositif étant prévu dans ladite cuve destinée à recevoir lesdits déchets graisseux.

Egalement préférentiellement, l'installation comprend une cuve supplémentaire pourvue d'au moins un dispositif d'agitation, prévue entre lesdits moyens de séparation dynamique et lesdits moyens d'incinération.

Avantageusement l'installation comprend des moyens d'addition d'au moins un produit chimique dans ladite cuve.

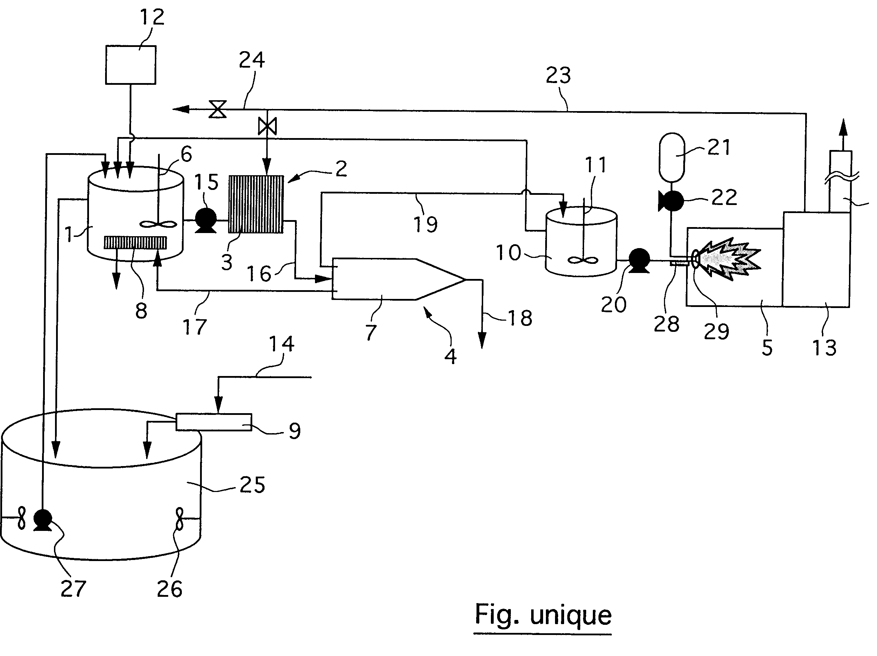

L'invention, ainsi que les différents avantages qu'elle présente seront plus facilement compris grâce à la description qui va suivre d'un exemple non-limitatif de mise en oeuvre de l'invention, en référence à la figure unique qui représente une installation pour la mise en oeuvre du procédé de traitement de déchets graisseux.

En référence à cette figure, l'installation comprend essentiellement une cuve calorifugée 1 pour la réception de déchets graisseux préalablement filtrés, des moyens de chauffage 2 incluant un dispositif échangeur 3 de chaleur de ces déchets graisseux, des moyens de séparation dynamique 4 permettant de séparer les déchets graisseux en une phase organique grasse, une phase solide et une phase liquide et des moyens d'incinération 5 de la phase organique grasse couplés à des moyens 13 de récupération de la chaleur produite lors de cette incinération, eux-mêmes en liaison avec le dispositif échangeur de chaleur 3.

Une telle installation pourra être constituée en une unité mobile ou en poste fixe ou semi-fixe.

Les déchets graisseux à traiter sont amenés par une canalisation 14 au niveau de moyens de filtration 9 qui, dans le cadre du présent exemple de réalisation, sont constitués par un filtre dégrilleur auto-décolmatant permettant de séparer la fraction solide des déchets de classe granulométrique supérieure à la fourchette 3-5 mm. On notera que les filtres dégrilleurs utilisés pourront être munis de rampes d'injection d'eau chaude ou de vapeur basse ou moyenne pression.

Le filtrat provenant du filtre 9 alimente une cuve de stockage 25 pourvue d'agitateurs 26. Le contenu de cette cuve de stockage 25 est acheminé en continu grâce à une pompe 27 jusqu'à la cuve calorifugée 1. Cette cuve 1 est également équipée d'un agitateur 6 qui permet d'homogénéiser les déchets graisseux filtrés.

Des moyens de distribution 12 de produits chimiques dans les déchets graisseux présents dans la cuve 1 sont prévus pour distribuer par gravité dans cette cuve des produits pouvant être notamment constitués par des coagulants, des tensio-actifs... Un tel ajout de substances chimiques lors du traitement n'est absolument pas obligatoire mais pourra contribuer à améliorer le traitement. On notera qu'en tout état de cause ces produits chimiques seront distribués en quantités minimes non susceptibles de créer une quelconque pollution.

Cette cuve est par ailleurs munie d'un échangeur de chaleur 8 dont le rôle sera précisé ci-après.

Les déchets filtrés et homogénéisés sont pompés à l'aide d'une pompe 15 de la cuve 1 vers les moyens de séparation dynamique 4. La canalisation 16 prévue à cet effet permet de faire transiter les déchets à travers les moyens de chauffage 2 et de les chauffer à une température qui, dans le cadre du présent exemple de réalisation, est comprise entre 65°C et 85°C mais qui pourra, dans d'autres modes de réalisation, être comprise dans une fourchette plus large. La température fournie par les moyens de chauffage 2 est en tout cas supérieure à la température de fusion maximale des corps gras contenus dans les déchets traités ce qui permet de liquéfier la fraction de plus faible densité constituée par la matière grasse et de favoriser la démixtion de l'émulsion plus ou moins stable des phases grasse et aqueuse tout en réduisant la viscosité de la phase grasse.

Les moyens de chauffage 2 incluent un échangeur de chaleur qui, comme il sera explicité ci-après plus en détails, est relié aux moyens d'incinération 5 par le biais d'un récupérateur 13.

Après avoir été portés à la température voulue, les déchets graisseux filtrés homogénéisés et chauffés arrivent en continu au niveau des moyens de séparation dynamique 4. Dans le cadre du présent exemple de réalisation ceux-ci sont constitués par une décanteuse centrifuge triphasique 7 qui permet de séparer les déchets en trois phases : une phase aqueuse, une phase solide et une phase grasse.

La phase aqueuse constituée par le centrat est évacuée par une canalisation 17. Cette phase aqueuse est fortement appauvrie en matières grasses ainsi qu'en matières en suspension résiduelles. Elle peut éventuellement être, en cas de besoin, dirigée vers une unité d'épuration classique des eaux usées.

Par ailleurs, cette phase aqueuse se caractérise par une température peu différente de la température des déchets graisseux lorsqu'ils entrent dans la décanteuse centrifuge 7. Avantageusement, la canalisation 17 transite donc dans la cuve 1 calorifugée au niveau de laquelle elle coopère avec l'échangeur de chaleur 8 déjà cité afin de préchauffer les déchets présents dans cette cuve. A sa sortie de cet échangeur de chaleur, la phase aqueuse présente alors une température d'environ 30°C.

La phase solide provenant de la décanteuse centrifuge 17 se caractérise par une siccité supérieure à 30% de matières sèches. Elle est constituée des sédiments et des matières en suspension présents initialement dans les déchets graisseux et qui n'ont pas été retenus par le filtre 9. Cette phase solide essentiellement organique est évacuée par la canalisation 18 et peut être, le cas échéant, acheminée vers une installation de traitement telle qu'une installation de compostage.

La phase grasse provenant de la décanteuse centrifuge est quant à elle dirigée par une canalisation 19 vers une cuve calorifugée 10 pourvue d'un agitateur 11 qui permet de l'homogénéiser. Cette phase contient l'essentiel des matières grasses des déchets graisseux traités. A ce niveau du traitement, cette phase organique grasse est épurée de façon significative en eau et en matières solubles et/ou suspendues d'origine minérale et contient moins de 5 % en poids de matières minérales et moins de 10 % en poids d'eau.

A sa sortie de la cuve 10, la phase est incorporée en continu et de manière dosée dans les moyens d'incinération 5, grâce à une pompe 20.

Les moyens d'incinération 5 sont constitués par une chaudière pourvue d'un injecteur spécifique 28 de la phase grasse, alimenté par la pompe 20, et d'un brûleur 29 relié à un réservoir 21 (fioul, gaz) muni d'une pompe 22. L'alimentation des moyens d'incinération 5 au moyen de la pompe 22 permet la mise en service desdits moyens d'incinération 5. En marche normale, la température de la chambre de combustion est contrôlée prioritairement par la pompe 20 et accessoirement par la pompe 22. A sa sortie de la cuve 10, la phase grasse est incorporée en continu et de manière dosée dans les moyens d'incinération 5. Ainsi, le combustible utilisé est constitué de la phase grasse générée par la première étape dudit procédé de traitement. La chaudière est choisie et dimensionnée de façon, d'une part, à permettre une pulvérisation satisfaisante ainsi qu'une combustion complète des corps gras et des gaz de combustion et, d'autre part, à satisfaire les contraintes réglementaires en matière d'émissions gazeuses. Elle coopère avec un dispositif 13 de récupération de la chaleur provenant de la combustion des matières grasses.

Une partie de l'eau chaude ou de la vapeur d'eau est dirigée, par une canalisation 23, vers l'échangeur de chaleur 3 prévu à la sortie de la cuve calorifugée 1 pour chauffer les déchets graisseux.

Une autre partie de cette eau ou de cette vapeur est dirigée, par une canalisation 24 vers une unité de valorisation de la chaleur récupérable telle qu'une unité de séchage ou encore une unité de production d'eau chaude.

Le procédé décrit est donc non seulement autosuffisant en énergie mais permet de plus de produire de l'eau chaude ou de la vapeur d'eau pouvant être facilement utilisée. Le procédé selon l'invention constitue donc également un procédé de valorisation des déchets graisseux.

Le mode de réalisation ici décrit n'a pas pour objet de réduire la portée de l'invention. Ainsi, il pourra être apporté à l'installation décrite certaines modifications sans sortir de son cadre. Notamment, l'installation pourra être équipée de moyens de séparation dynamique autres que ceux mentionnés.

## Revendications

1. Procédé de traitement de déchets graisseux essentiellement constitués par l'émulsion d'une phase aqueuse et d'une phase grasse et de particules solides, caractérisé en ce qu'il comprend une première étape consistant à homogénéiser et à chauffer lesdits déchets graisseux à une température supérieure à la température de fusion maximale des corps gras contenus dans lesdits déchets, une deuxième étape de séparation dynamique desdits déchets permettant l'obtention d'une phase organique grasse, d'une phase aqueuse et d'une phase solide au moins partiellement déshydratée, et une troisième étape consistant à faire subir à ladite phase grasse une dégradation thermique de façon à autoriser une combustion complète des corps gras contenus dans ladite phase grasse, et en ce qu'il consiste à utiliser au moins une partie de la chaleur produite au cours de l'étape de dégradation thermique pour chauffer lesdits déchets graisseux au cours de ladite première étape.

2. Procédé selon la revendication 1 caractérisé en ce qu'il comprend une étape préliminaire de filtration desdits déchets visant à séparer lesdites particules présentant une granulométrie supérieure à la classe 2 - 10 mm.

3. Procédé selon l'une des revendications 1 ou 2 caractérisé en ce que la température à l'issue de ladite première étape est comprise entre 60° C et 100°C.

4. Procédé selon la revendication 3 caractérisé en ce que la température à l'issue de ladite première étape est comprise entre 65 et 85°C.

5. Procédé selon l'une des revendications 1 à 4 caractérisé en ce que lesdits déchets graisseux renferment au moins 1% en poids de matières grasses.

6. Procédé selon l'une des revendications 1 à 5 caractérisé en ce que ladite deuxième étape de séparation dynamique est effectuée par centrifugation.

7. Procédé selon l'une des revendications 1 à 6 caractérisé en ce que ladite première étape est effectuée sous agitation.

8. Procédé selon l'une des revendications 1 à 7 caractérisé en ce qu'il comprend une étape consistant à récupérer au moins une partie de la chaleur de la phase aqueuse résultant de ladite deuxième étape pour chauffer lesdits déchets graisseux au cours de ladite première étape.

9. Procédé selon l'une des revendications 1 à 8 caractérisé en ce qu'il comprend une étape consistant à ajouter au moins un produit chimique auxdits déchets graisseux au cours de ladite première étape.

10. Installation pour la mise en oeuvre du procédé de traitement de déchets graisseux selon l'une des revendications 1 à 9 caractérisée en ce qu'elle comprend au moins une cuve (1) destinée à recevoir lesdits déchets graisseux, des moyens de chauffage (2) desdits déchets graisseux, des moyens de séparation dynamique (4) permettant d'obtenir une phase solide, une phase grasse et une phase aqueuse à partir desdits déchets graisseux chauffés, des moyens d'incinération (5) de ladite phase grasse couplés à des moyens de récupération (13) de la chaleur produite lors de cette incinération, lesdits moyens de chauffage (2) incluant un échangeur (3) de la chaleur produite par lesdits moyens d'incinération (5) et récupérée par lesdits moyens de récupération (13) pour chauffer lesdits déchets graisseux présents dans ladite cuve (1) ou à leur sortie de ladite cuve (1).

11. Installation selon la revendication 10 caractérisée en ce que ladite cuve (1) destinée à recevoir lesdits déchets graisseux est pourvue d'au moins un dispositif d'agitation (6).

12. Installation selon la revendication 10 ou 11 caractérisée en ce que lesdits moyens de séparation dynamique incluent un dispositif de centrifugation.

13. Installation selon la revendication 12 caractérisée en ce que ledit dispositif de centrifugation est une décanteuse centrifuge triphasique .

14. Installation selon l'une des revendications 10 à 13 caractérisée en ce qu'elle comprend de plus des moyens de filtration (9) prévus en amont de ladite cuve (1).

15. Installation selon l'une des revendications 10 à 14 caractérisée en ce qu'elle comprend un dispositif échangeur de la chaleur (8) de la phase aqueuse provenant desdits moyens de séparation dynamique (4, 7), ledit dispositif étant prévu dans ladite cuve (1) destinée à recevoir lesdits déchets graisseux.

16. Installation selon l'une des revendications 10 à 15 caractérisée en ce qu'elle comprend une cuve supplémentaire (10) pourvue d'au moins un dispositif d'agitation (11), prévue entre lesdits moyens de séparation dynamique (4) et lesdits moyens d'incinération (5).

17. Installation selon l'une des revendications 10 à 16 caractérisée en ce qu'elle comprend des moyens d'addition d'au moins un produit chimique (12) dans ladite cuve.
